# FASCICULE DE BREVET EUROPEEN

(11) **EP 0 375 514 B1**
(45) Date de publication et mention de la délivrance du brevet: **29.03.1995**
(21) Numéro de dépôt: 89403475.0
(22) Date de dépôt: 14.12.1989
(51) Int. Cl.: A61C 17/02

(54) **Dispositif de nettoyage dentaire**
Zahnreinigungsgerät
Tooth-cleaning device

(30) Priorité: 19.12.1988 FR 8816729; 27.04.1989 FR 8905618; 27.06.1989 FR 8908509
(43) Date de publication de la demande: 27.06.1990
(60) Demande divisionnaire: 93120678.3
(73) Titulaire: Barth, Frédéric, F-91190 Gif-sur-Yvette (FR)
(72) Inventeur: Barth, Frédéric, F-91190 Gif-sur-Yvette (FR)
(74) Mandataire: Casalonga, Axel

(56) Documents cités:
- EP-A- 0 001 044
- EP-A- 0 037 434
- CH-A- 584 030
- DE-C- 3 642 361
- FR-A- 1 119 083
- US-A- 3 930 059
- US-A- 4 031 908

## Description

La présente invention invention se rapporte à un dispositif de nettoyage dentaire susceptible d'être connecté à un hydropulseur, pour produire un effet de nettoyage dentaire par jets d'eau.

La mastication provoque inévitablement, chez tout être humain denté, des infiltrations alimentaires interdentaires. La non élimination des tassements alimentaires qui en résultent est à l'origine des caries proximales et de maladies parodontales.

L'utilisation d'une brosse à dents ne permet pas le nettoyage de ces espaces anatomiques qui sont par contre accessibles aux jets d'eau interdentaires d'appareils dits hydropulseurs, aux fils interdentaires et autres brossettes et cure-dents. L'hygiène interdentaire idéale consiste à utiliser simultanément le fil interdentaire et les jets.

Par effet mécanique, le fil interdentaire permet de déloger les fibres alimentaires coincées au niveau même du point de contact, ce que ne peut pas faire un jet, puis, par des mouvements verticaux alternatifs de faible amplitude, de racler les faces mésiales et distales des deux dents adjacentes. C'est l'usage du fil interdentaire qui permet la prévention des caries jumelles du point de contact, Le fil est supérieur à l'action du jet en ce sens qu'il déloge à coup sûr les fibres coincées au niveau même du point de contact, alors que le jet ne peut pas en venir à bout, Le fil par son action mécanique de raclage est encore supérieur au jet quant à la qualité de l'état de surface obtenu.

Le jet par contre a l'avantage de pouvoir déloger rapidement les tassements alimentaires déjà passés sous le point de contact et pouvant être éliminés latéralement par pression d'eau. Mais outre la moins bonne qualité de l'état de surface obtenu, le jet peut être dangereux à l'utilisation. En effet, surtout au plus fort réglage de la pression, il faut éviter impérativement d'orienter le jet obliquement dans le sens dent-gencive, ce qui entraînerait à la longue un décollement de la gencive. Le danger est alors que l'utilisation quotidienne du jet devient un cofacteur de destruction parodontale.

Pour ne pas nuire, le jet devrait donc être manipulé avec rigueur et discernement, c'est-à-dire en maîtrisant constamment l'orientation du jet d'eau perpendiculairement aux grands axes des dents ou obliquement dans le sens gencive-dent.

Pratiquement, il s'avère très difficile voire impossible, avec les appareils connus à hydropulseur, de maîtriser parfaitement cette orientation optimale dans tous les espaces interdentaires d'une même bouche, le jet étant produit par une canule qui est simplement tenue à la main,

Avec l'âge ou la maladie parodontale, la gencive papillaire peut se rétracter et disparaître. Les embrasures largement ouvertes qui en résultent se remplissent volontiers de tassements alimentaires qu'il est commode de nettoyer avec un jet bien orienté ou une brossette interdendaire montée sur un manche ou autre cure-dent.

Parmi les différents systèmes de fil interdentaire, il existe des porte-fil jetables avec un fil interdentaire serti aux extrémités des deux branches d'une fourche. D'autres systèmes de fil interdendaire comportent un porte-fil en forme de fourche avec deux chas dans lequel le fil doit être enfilé ce qui est difficile. Par ailleurs, il existe des systèmes de fil interdentaire avec une fourche comportant dans ses deux branches des encoches de réception du fil, ce qui simplifie la mise en place du fil, mais le maintien du fil dans ces encoches est aléatoire au montage et à l'utilisation, notamment lors du désengagement du point de contact.

Par ailleurs, il est déjà connu par le brevet US n° 4 031 908 de prévoir, sur un même dispositif de nettoyage dentaire, l'utilisation d'un fil interdentaire maintenu entre les deux branches d'une fourche, et l'utilisation d'un jet d'eau émis par l'une des branches de la fourche en direction de l'autre branche, de façon adjacente à la position du fil interdentaire. Ce dispositif connu présente cependant un certain nombre d'inconvénients.

Du fait de la présence d'un jet d'eau unique, ce dispositif ne permet qu'un rinçage dans un sens en une seule manipulation, un rinçage dans les deux sens nécessitant une double manipulation. Or, il arrive souvent qu'un rinçage dans un seul sens ne permette pas de déloger correctement les tassements alimentaires dans les deux embrasures interdentaires, vestibulaire et linguale.

Par ailleurs, pour permettre cette double manipulation, il est nécessaire que la fourche de ce dispositif connu soit une fourche plate, alors qu'un porte-fil interdentaire doit de préférence présenter la forme d'une fourche incurvée pour pouvoir accéder correctement à toutes les dents.

De plus, du fait de cette nécessité de double manipulation, le jet d'eau peut être conçu uniquement de manière à agir perpendiculairement aux grands axes des dents car si le jet étant incliné, il serait orienté correctement dans le sens gencive-dent lors de la première manipulation, mais serait obligatoirement orienté dans le mauvais sens, c'est-à-dire le sens dent-gencive lors de la deuxième manipulation, après retournement de 180° du dispositif.

En plus de ces problèmes dus à la présence d'un jet d'eau unique, il faut noter que sur ce dispositif connu, le remplacement d'un tronçon de fil interdentaire rompu par un nouveau tronçon de fil interdentaire et la mise sous tension correcte de ce tronçon de fil interdentaire présentent des difficultés dans la mesure où, d'une part, les deux chas prévus à l'extrémité libre des deux branches de la fourche sont très fins de sorte qu'il n'est pas facile d'enfiler le fil interdentaire dans ces chas et que, d'autre part, le blocage sous tension du fil interdentaire s'effectue par serrage des deux brins du fil entre le corps (poignée) du dispositif et la tête en forme de fourche, lesdites deux parties étant reliées par vissage.

Enfin, on connaît par le brevet US-A-3 472 247 un dispositif de nettoyage dentaire avec un instrument en forme de fourche à deux branches susceptible d'être connecté à un hydropulseur, chacune des deux branches de l'instrument comportant sur sa face interne plusieurs orifices de sortie de plusieurs jets d'eau, les orifices opposés par paires des deux branches permettant la sortie de deux jets d'eau de sens contraire, non alignés Selon ce document, les orifices sont orientés de manière que les orifices opposés par paires permettent la sortie de jets d' eau qui, lorsqu'aucune dent ne se trouve sur leurs trajectoires, se recontrent et se neutralisent, cela afin d'éviter leur impact sur des parties sensibles ou fragiles de la bouche telles que les joues, la langue ou la gorge. Du fait de cette orientation des orifices, les jets d'eau de sens contraire n'ont cependant qu'une efficacité de nettoyage limitée.

La présente invention a pour objet un dispositif de nettoyage dentaire procurant un nettoyage complet des espaces interdentaires en une seule opération. L'invention a également pour objet un dispositif de nettoyage dentaire procurant un nettoyage amélioré par jet d'eau avec une orientation toujours correcte du jet d'eau dans le sens gencive-dent. L'invention a par ailleurs pour objet un dispositif de nettoyage dentaire conçu de manière à permettre simultanément le nettoyage par jet d'eau et par fil interdentaire et/ou par brossette(s) ou pinceau(x).

Le dispositif de nettoyage dentaire tel que revendiqué comprend un instrument en forme de fourche à deux branches susceptible d'être connecté à un hydropulseur. Chacune des deux branches comporte sur sa face interne au moins un orifice de sortie d'au moins un jet d'eau, les orifices opposés par paire(s) des deux branches permettant la sortie de deux jets d'eau de sens contraire, non alignés. Selon l'invention, les orifices sont orientés de manière que les orifices opposés par paires permettent la sortie de deux jets d'eau qui ne se rencontrent pas.

Les deux jets d'eau de sens contraire mais non alignés, orientés de manière à ne pas se rencontrer, assurent, en une seule manipulation, un nettoyage des deux embrasures interdentaires vestibulaire et linguale, l'efficacité de nettoyage étant fortement améliorée par l'effet de rotation (vortex) que produisent les deux jets orientés de manière à ne pas se rencontrer. De plus, l'action successive des deux jets opposés dans une même embrasure produit sur les tassements alimentaires qui s'y trouvent un effet alternatif (push-pull) qui s'avère particulièrement efficace pour leur déblocage et évacuation.

Les orifices de sortie des jets d'eau peuvent être avantageusement orientés de manière que les orifices opposés par paire(s) permettent la sortie de deux jets d'eau parallèles, décalés, ce qui augmente, en cas de positionnement oblique de l'instrument par rapport aux dents, la probabilité que l'un au moins des deux jets atteigne avec une grande efficacité chaque embrasure interdentaire.

De préférence, les orifices sont orientés de manière que les orifices opposés par paire(s) permettent la sortie de deux jets d'eau obliques orientés dans le sens gencive-dent, ce qui assure aux deux jets une orientation toujours correcte.

Il est également possible, dans le cadre de l'invention, de prévoir dans chaque branche de l'instrument en forme de fourche plusieurs orifices permettant la sortie de jets d'eau multiples ou douchettes.

Le dispositif conforme à l'invention peut en outre comprendre, sur l'instrument en forme de fourche à deux branches produisant deux jets d'eau contraires, deux chas pour le passage et le maintien d'un fil interdentaire au voisinage de l'extrémité libre desdites deux branches. Dans ce cas, lesdits chas disposés à proximité immédiate desdits orifices sont dimensionnés et orientés de manière à permettre au choix le passage et le maintien d'un fil interdentaire et/ou le maintien de brossettes ou pinceaux. Le dispositif conforme à l'invention peut ainsi être utilisé simultanément comme double jet d'eau et fil interdentaire, les deux actions de nettoyage se complétant l'une l'autre. Si, avec l'âge, les espaces interdentaires se dénudent, on peut avantageusement remplacer le fil par des brossettes ou pinceaux coincés dans les chas de guidage. Le maintien simultanément d'un fil interdentaire et de brossettes ou pinceaux est également possible.

En se référant au dessin annexé, on va décrire ci-après plus en détail plusieurs modes de réalisation illustratifs et non limitatifs du dispositif de nettoyage dentaire conforme à l'invention; sur les dessins :
la figure 1 est une vue en perspective d'un instrument en forme de fourche servant de porte-fil interdentaire;
la figure 2 est une vue en perspective de ce même instrument connecté à un hydropulseur pour servir d'appareil de nettoyage dentaire à double jet d'eau;
la figure 3 est une vue en perspective de ce même instrument dans sa double fonction de porte-fil interdentaire et d'appareil de nettoyage dentaire à double jet d'eau;
la figure 4 représente une variante de l'instrument avec production de jets d'eau multiples par chaque branche de l'instrument en forme de fourche;
la figure 5 représente une variante de l'instrument avec deux jets d'eau obliques orientés dans le sens gencive-dent;
la figure 6 montre l'instrument dans sa version double jet d'eau et porte-brossette;
la figure 7 représente l'instrument dans sa version double jet d'eau et porte-pinceaux.

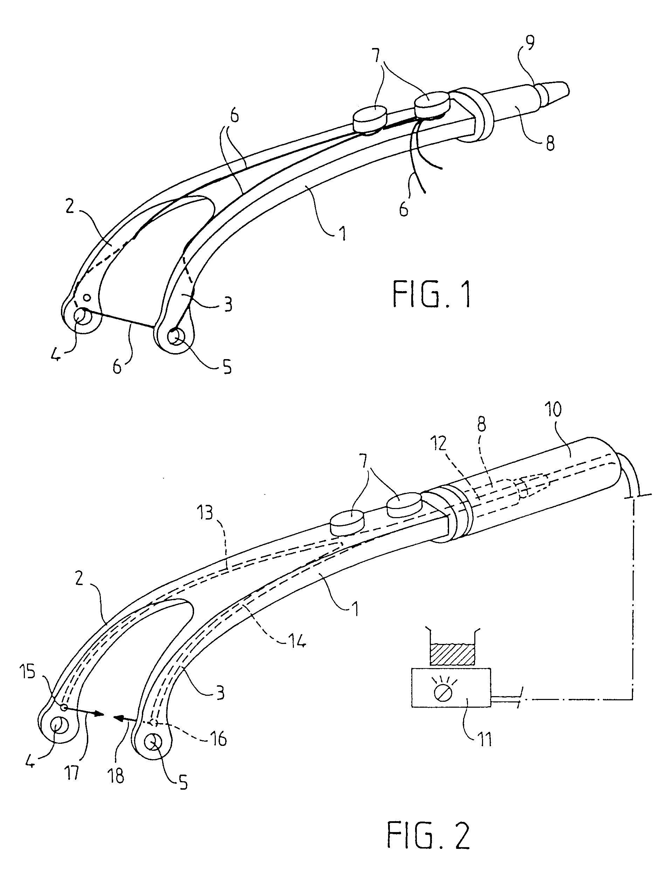

Selon la figure 1, un instrument de nettoyage dentaire comprend un corps 1 se terminant à une extrémité par une fourche à deux branches 2, 3. Les deux branches 2, 3 de la fourche sont inclinées par rapport au corps 1 de manière quele plan commun des branches 2, 3 fasse, à l'extrémité libre des branches, un angle d'environ 45° avec le plan du corps 1 de l'instrument, les deux branches 2, 3 s'écartant l'une de l'autre de façon symétrique par rapport à l'axe longitudinal du corps 1.

Au voisinage de leur extrémité libre, les branches 2 et 3 du corps 1 comportent deux chas 4 et 5 alignés dans lesquels passe un fil interdentaire 6 dont les deux extrémités sont enroulées et coincées sur deux taquets 7 disposés sur le corps 1.

A son extrémité opposée, le corps 1 se termine par un embout de jonction 8 pour l'emboîtement dans le manche d'un hydropulseur, comme décrit plus en détail en référence à la figure 2. L'embout 8 comporte une gorge 9 correspondant à un joint d'étanchéité contenu dans le manche de l'hydropulseur, et un épaulement coloré est prévu entre le corps 1 et l'embout 8 pour individualiser l'instrument.

Selon la figure 2 sur laquelle le corps 1 de l'instrument est raccordé au manche 10 d'un hydropulseur 11, on reconnaît que l'embout 8 et le corps 1 sont traversés par un conduit 12 qui, à l'intérieur du corps 1, se divise en deux conduits 13 et 14 aboutissant au voisinage des extrémités libres des branches 2 et 3 où ils débouchent, à proximité des chas 4 et 5, sur la face interne des branches, par deux orifices 15 et 16 orientés de telle manière qu'ils permettent la sortie de deux jets d'eau 17 et 18 de sens contraire lorsque l'hydropulseur 11 est en marche.

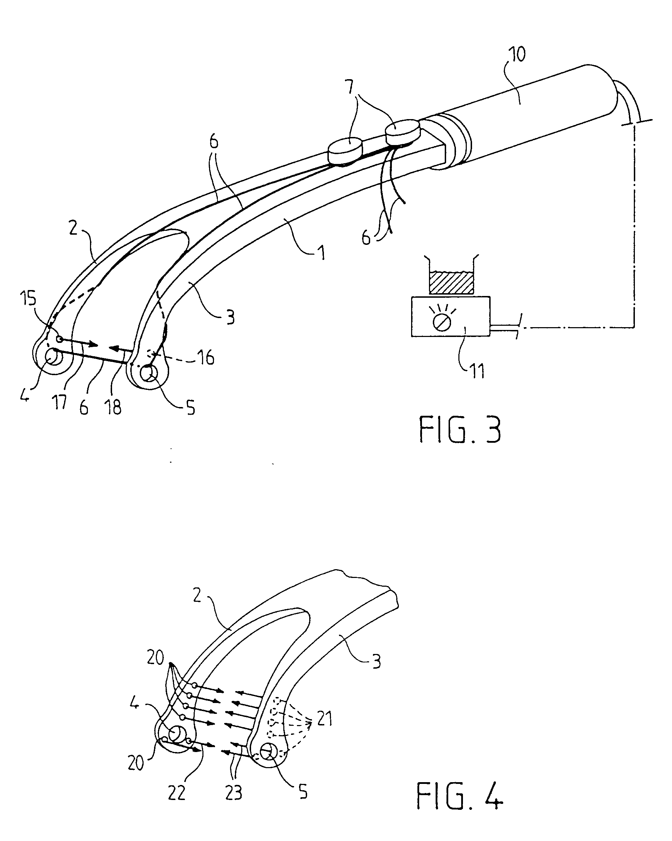

Sur la figure 3, l'instrument suivant les figures 1 et 2 est utilisé simultanément comme instrument de nettoyage avec fil interdentaire 6 selon là figure 1 et comme instrument de nettoyage avec double jet d'eau 17, 18 selon la figure 2.

Dans la variante représentée par la figure 4, les deux orifices 15 et 16 prévus suivant la figure 2 dans les deux branches 2 et 3 de la fourche pour produire deux jets d'eau 17, 18 de sens contraire sont remplacés par une pluralité d'orifices 20 et 21 produisant deux jets multiples 22 et 23 formant deux douchettes de sens contraire.

En ce qui concerne les deux jets d'eau 17, 18 de sens contraire selon les figures 2 et 3, de même que les deux jets d'eau multiples 22, 23 de sens contraire selon la figure 4, il y a lieu de noter que ces jets sont parallèles, mais sont décalés dans le sens de la longueur du corps 1 de l'instrument, comme cela apparaît clairement sur les figures 2 à 4.

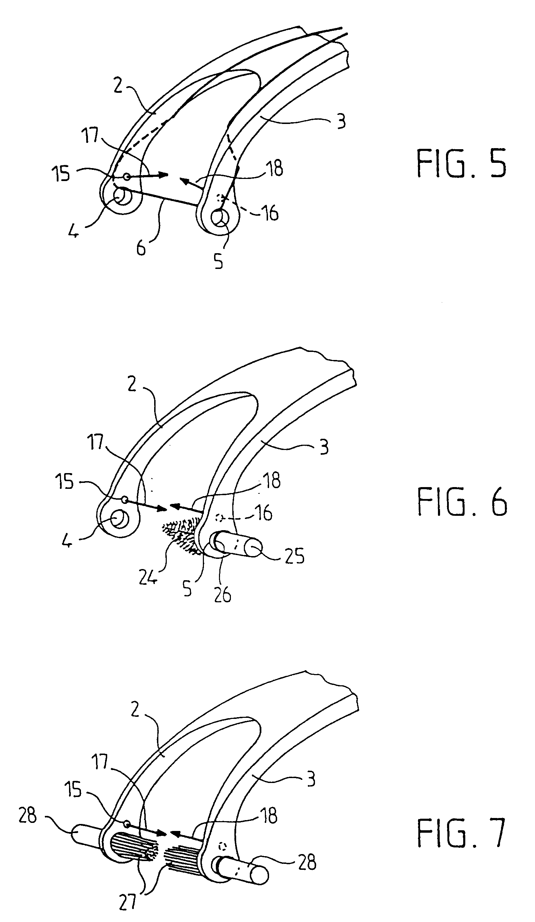

Selon la figure 5, les deux orifices 15 et 16 prévus dans les deux branches 2 et 3 sont orientés de manière à produire deux jets d'eau 17 et 18 obliques, convergeant dans le sens gencive-dent. Ainsi les deux jets sont automatiquement bien orientés sans risquer d'entraîner un décollement gingival préjudiciable à la bonne santé parodontale.

Selon la figure 6, l'un des deux chas 4 et 5, à savoir le chas 5 de la branche 3 de l'instrument en forme de fourche, reçoit une brossette 24 à poils radiaux dont le corps 25 est emboîté depuis l'intérieur de la fourche dans le chas 5 et y est maintenu par friction ou par un épaulement ou anneau d'encliquetage 26, de manière que la brossette 24 fasse saillie sur la branche 3 en direction de l'autre branche 2.

Bien entendu, le chas 4 de l'autre branche 2 peut également recevoir une telle brossette orientée vers la branche 3.

Suivant la figure 7, deux pinceaux 27 à poils axiaux sont fixés dans les deux chas des deux branches 2 et 3, leurs corps 28 étant emboîtés et maintenus par friction ou encliquetage de la même manière que pour les brossettes de la figure 6.

Il y a lieu de noter qu'aussi bien les brossettes 24 selon la figure 6 que les pinceaux 27 selon la figure 7, utilisables de préférence simultanément avec un double jet d'eau 17, 18, peuvent être également utilisés simultanément avec un fil interdentaire 6 suivant les figures 1, 3 et 5, les chas 4 et 5 permettant à la fois le passage d'un fil interdentaire 6 et l'emboîtement des corps 25, 28 des brossettes 24 ou pinceaux 27.

Bien que suivant tous les modes de réalisation représentés, l'instrument de nettoyage par double jet d'eau soit constitué par un corps en forme de fourche pouvant servir en même temps de porte-fil interdentaire, il est possible, dans le cadre de l'invention, d'utiliser ce système de nettoyage à double jet d'eau sur un instrument en forme de fourche prévu uniquement pour cette fonction, c'est-à-dire dépourvu des deux chas 4 et 5 pouvant recevoir un fil interdentaire et/ou des brossettes et/ou des pinceaux.

## Revendications

1. Dispositif de nettoyage dentaire comprenant un instrument (1) en forme de fourche à deux branches (2, 3) susceptible d'être connecté à un hydropulseur (11), chacune des deux branches (2, 3) de l'instrument (1) comportant sur sa face interne au moins un orifice (15, 16; 20, 21) de sortie d'au moins un jet d'eau (17, 18; 22, 23) les orifices opposés par paire(s) des deux branches permettant la sortie de deux jets d'eau de sens contraire, non alignés, caractérisé par le fait que les orifices (15, 16; 20,21) sont orientés de manière que les orifices opposés par paire(s) permettent la sortie de deux jets d'eau qui ne se rencontrent pas.

2. Dispositif selon la revendication 1, caractérisé par le fait que les orifices (15, 16; 20; 21) sont orientés de manière que les orifices opposés par paire(s) permettent la sortie de deux jets d'eau (17, 18; 22, 23) parallèles décalés.

3. Dispositif suivant la revendication 1 ou 2, caractérisé par le fait que les orifices (15, 16; 20, 21) sont orientés de manière que les orifices opposés par paire(s) permettent la sortie de deux jets d'eau (17, 18; 22, 23) obliques orientés dans le sens genvice-dent.

4. Dispositif suivant l'une quelconque des revendications précédentes, caractérisé par le fait que chaque branche (2, 3) de l'instrument comporte plusieurs orifices (20, 21) permettant la sortie de jets d'eau multiples ou douchettes (22, 23).

5. Dispositif suivant l'une quelconque des revendications précédentes, comprenant en outre deux chas (4, 5) pour le passage et le maintien d'un fil interdentaire (6, 29) au voisinage de l'extrémité libre desdites deux branches (2, 3) de l'instrument (1) en forme de fourche, caractérisé par le fait que lesdits chas (4, 5) disposés à proximité immédiate desdits orifices (15, 16) sont dimensionnés et orientés de manière à permettre au choix le passage et le maintien d'un fil interdentaire (6, 29) et/ou le maintien de brossettes (24) ou pinceaux (27).

## Claims

1. Dental cleansing device comprising a fork-shaped instrument (1) with two arms (2, 3) capable of being connected to a water pik (11), each of the two arms (2, 3) of the instrument (1) having, on its internal face, at least one orifice (15, 16; 20, 21) for ejecting at least one water jet (17, 18; 22, 23,), the orifices opposed in pairs of the two arms enabling the ejection of two non-aligned water jets in opposite directions, characterized in that the orifices (15, 16; 20, 21) are directed so that the orifices opposed in pairs enable the ejection of two water jets which do not meet each other.

2. Device according to Claim 1, characterized in that the orifices (15, 16; 20, 21) are directed so that the orifices opposed in pairs enable the ejection of two parallel offset water jets (17, 18; 22, 23).

3. Device according to Claim 1 or 2, characterized in that the orifices (15, 16; 20, 21) are directed so that the orifices opposed in pairs enable the ejection of two oblique water jets (17, 18; 22, 23) directed in the gingiva-tooth direction.

4. Device according to any one of the preceding claims, characterized in that each arm (2, 3) of the instrument has several orifices (20, 21) enabling the ejection of multiple water jets or sprays (22, 23).

5. Device according to any one of the preceding claims, comprising in addition two needle eyes (4, 5) for the passage and securing of a piece of interdental floss (6, 29) in the vicinity of the free end of the said two arms (2, 3) of the fork-shaped instrument (1), characterized in that the said needle eyes (4, 5) arranged in immediate proximity to the said orifices (15, 16) are dimensioned and directed so as to enable, as desired, the passage and securing of a piece of interdental floss (6, 29) and/or the securing of radial (hair) (24) or axial (hair) (27) brushes.

## Patentansprüche

1. Zahnreinigungsvorrichtung, bestehend aus einem Instrument (1) in der Form einer Gabel mit zwei Armen (2, 3), das an ein Wasserpumpgerät (11) angeschlossen werden kann, wobei jeder der beiden Arme (2, 3) des Instruments (1) an seiner Innenseite mindestens eine Austrittsöffnung (15, 16; 20, 21) für mindestens einen Wasserstrahl (17, 18; 22, 23) aufweist, wobei die paarweise einander gegenüberliegenden Öffnungen der beiden Arme den Austritt von zwei Wasserstrahlen in einander entgegengesetzter Richtung, die nicht auf einer Linie ausgerichtet sind, ermöglichen,
dadurch gekennzeichnet,
daß die Öffnungen (15, 16; 20, 21) dergestalt ausgerichtet sind, daß die paarweise einander gegenüberliegenden Öffnungen den Austritt von zwei Wasserstrahlen ermöglichen, die sich nicht treffen.

2. Vorrichtung nach Anspruch 1, dadurch gekennzeichnet, daß die Öffnungen (15, 16; 20, 21) dergestalt ausgerichtet sind, daß die paarweise einander gegenüberliegenden Öffnungen den Austritt von zwei parallelen, gegeneinander verschobenen Wasserstrahlen (17, 18; 22, 23) ermöglichen.

3. Vorrichtung nach Anspruch 1 oder 2, dadurch gekennzeichnet, daß die Öffnungen (15, 16; 20, 21) dergestalt ausgerichtet sind, daß die paarweise einander gegenüberliegenden Öffnungen den Austritt von zwei schräg in Richtung Zahnfleisch-Zahn ausgerichteten Wasserstrahlen (17, 18; 22, 23) ermöglichen.

4. Vorrichtung nach einem der vorherigen Ansprüche, dadurch gekennzeichnet, daß jeder Arm (2, 3) des Instruments mehrere Öffnungen (20, 21) aufweist, die den Austritt von mehreren Wasserstrahlen oder Duschstrahlen (22, 23) ermöglichen.

5. Vorrichtung nach einem der vorherigen Ansprüche, die ferner nahe beim freien Ende der genannten beiden Arme (2, 3) des gabelförmigen Instruments (1) zwei Öhre (4, 5) zum Durchstecken und Befestigen von Zahnseide (6, 29) aufweist, dadurch gekennzeichnet, daß die genannten Öhre (4, 5), die in unmittelbarer Nähe der genannten Öffungen (15, 16) angeordnet sind, dergestalt bemessen und ausgerichtet sind, daß sie wahlweise das Durchstecken und Befestigen von Zahnseide (6, 29) und/oder das Anbringen von kleinen Zahnbürsten (24) oder Pinseln (27) ermöglichen.
